# EUROPÄISCHE PATENTANMELDUNG

(11) **EP 3 064 466 A1**
(43) Veröffentlichungstag der Anmeldung: **07.09.2016**
(21) Anmeldenummer: 16156098.2
(22) Anmeldetag: 17.02.2016
(51) Int. Cl.: B66F 9/07, B65G 1/04, B66F 9/08

(54) **FAHRWAGEN FÜR EIN PALETTENHANDHABUNGSSYSTEM**

(30) Priorität: 02.03.2015 DE 102015002532
(71) Anmelder: Liebherr-Verzahntechnik GmbH, 87437 Kempten (DE)
(72) Erfinder: Mundt, Alois, 87435 Kempten (DE); Mattern, Thomas, 87669 Rieden (DE); Guggemos, Herbert, 87496 Untrasried (DE)
(74) Vertreter: Laufhütte, Dieter

(57) **Zusammenfassung**

Die vogeschlagene Erfindung betrifft einen Fahrwagen [10] für ein Palettenhandhabungssystem [1] mit wenigstens einem rahmenartigen Hubmast und einer darin höhenverstellbar geführten Hubeinheit [20], wobei für die Ausführung der Hubbewegung der Hubeinheit [20] wenigstens ein flaschenzugbasierter Antrieb vorgesehen ist.

## Beschreibung

Die Erfindung betrifft einen Fahrwagen für ein Palettenhandhabungssystem mit wenigstens einem rahmenartigen Hubmast und einer darin höhenverstellbar geführten Hubeinheit.

Palettenhandhabungssysteme verlagern das Rüsten der Werkstücke von der Maschine auf einen separaten Rüstplatz und speichern diese vorgerüsteten Werkstücke in einem zwischengeschalteten Speichersystem. Dadurch wird das Rüsten und Bearbeiten von der Maschine entkoppelt und die im System gespeicherten vorgerüsteten Werkstücke gleichen kurze und lange Maschinenlaufzeiten aus, wodurch eine mannarme oder sogar mannlose Arbeitsschicht möglich wird.

Palettenhandhabungssysteme sind somit ein bewährtes Automationswerkzeug für die wirtschaftliche und effiziente Kleinserien- und Einzelteilfertigung. Gängige Systeme sind für Transportlastbereiche bis zu 10.000 kg konstruiert. Bestehende Systeme sind für die Handhabung besonders schwerer Bauteile nicht geeignet bzw. bedürfen aufwendiger Maßnahmen, um den Anforderungen moderner Handhabungssysteme gerecht werden zu können.

Der weltweite Bedarf an Großanlagen wächst ununterbrochen. Großanlagen spielen insbesondere in der Energieerzeugerbranche eine wichtige Rolle, wo insbesondere Windkraftanlagen, Diesel- oder Gasturbinen, Wasserkraftanlagen und Pumpen für die Erdöl- und Gasindustrie benötigt werden. Die dafür benötigten Bauteile werden immer schwerer und größer und erreichen nicht selten ein Gewicht von 13 Tonnen oder mehr. Bis jetzt werden diese Bauteile auf nicht oder nur teilautomatisierten Maschinen gefertigt.

Bauteile mit mehreren Tonnen Gewicht müssen an einer Bearbeitungsmaschine zu- und abgeführt werden. Dazu ist bei einer konventionellen Fertigung ohne Palettenhandhabungssystem eine umfangreiche Transportlogistik erforderlich. Die Verlagerung der mehrere Tonnen schweren Bauteile zwischen der Vielzahl an Fertigungsmaschinen erfolgt mittels Gabelstapler und Hallenkräne. Zudem müssen die Bauteile in speziellen Speichervorrichtungen separat zwischengelagert werden. Benötigt ein Bauteil aufgrund seiner Komplexität mehrere unterschiedliche Aufspannungen, wird die erforderliche Transportaufgabe zumeist noch verschärft, auch im Sinne einer platzsparenden Zwischenlagerung.

Die vorliegende Erfindung beschäftigt sich mit der Aufgabenstellung, ein neuartiges Palettenhandhabungssystem, insbesondere für besonders schwere Bauteile, zu schaffen.

Gelöst wird diese Aufgabe durch einen Fahrwagen für ein Palettenhandhabungssystem gemäß den Merkmalen des Anspruchs 1. Vorteilhafte Ausgestaltungen des Fahrwagens sind Gegenstand der sich an den Hauptanspruch anschließenden abhängigen Unteransprüche.

Erfindungsgemäß wird ein Fahrwagen für ein Palettenhandhabungssystem vorgeschlagen, mit wenigstens einem rahmenartigen Hubmast und einer in dem Hubmast höhenverstellbar geführten Hubeinheit. Um die benötigte Kraft zum Anheben des auf der Hubeinheit aufgenommenen schweren Bauteils mit einem vergleichsweise kleinbauenden Antrieb zu stemmen, ist erfindungsgemäß zur Ausführung der Hubbewegung der Hubeinheit wenigstens ein flaschenzugbasierter Antrieb verbaut. Durch den Einsatz eines flaschenzugbasierten Antriebssystems können größere Lasten angehoben werden, ohne dass dazu großdimensionierte Antriebsaggregate notwendig werden. Es können stattdessen herkömmliche Antriebsaggregate verwendete werden, die platzsparend und konstruktiv einfach am Hubmast montierbar sind. Insbesondere lassen sich mit dem erfindungsgemäßen Fahrwagen Objekte mit einem Gewicht von 13 Tonnen oder mehr anheben und verfahren. Das flaschenzugbasierte Antriebssystem reduziert zudem betriebsbedingte Belastung einzelner Komponenten des Fahrwagens, wodurch Verschleißerscheinungen verringert werden können.

Zur Realisierung des Flaschenzugs ist wenigstens eine lose Rolle notwendig, um die aufzubringende Hubkraft des Antriebs zu reduzieren, insbesondere zu halbieren. Als geeignet erweist sich eine Anordnung der losen Rolle an der verfahrbaren Hubeinheit. Die Rotationsachse der an der Hubeinheit befestigten Rolle steht vorzugsweise senkrecht auf einer Seitenwandung der Hubeinheit, die vorzugsweise die Querseite der Hubeinheit formt.

Eine weitere Umlenkrolle kann am oberen Ende des Hubmastes befestigt sein, vorzugsweise nahe der Mastspitze. Sinnvoll ist eine Integration der Umlenkrolle in die Führungsschiene des Hubmastes zur Führung der Hubeinheit, so dass der Seilverlauf von der Umlenkrolle des Hubmastes bis hin zur Rolle der Hubeinheit entlang bzw. geschützt innerhalb der Führungsschiene liegt. Die Rotationsachse der Umlenkrolle liegt bevorzugt nicht parallel zur Rotationsachse der Rolle an der Hubeinheit, besonders bevorzugt stehen diese senkrecht aufeinander, äußerst bevorzugt steht diese senkrecht auf der Rahmenebene des Hubmastes, d.h. senkrecht auf der durch den Hubmastrahmen umschlossenen Ebene.

Als Zugmittel kann ein Seil eingesetzt werden, dass senkrecht innerhalb der Führungsschiene zwischen beiden Rollen verläuft.

Zur Betätigung des Flaschenzuges dient wenigstens ein Antrieb mit einer entsprechenden Trommel, insbesondere Seiltrommel. Die Drehachse der Trommel und/oder des Antriebs verläuft sinnvollerweise parallel zur Rotationsachse der am Hubmast montierten Umlenkrolle. Der Antrieb inklusive Trommel ist vorzugsweise an der Außenseite des Hubmastes bzw. an der Außenfläche des Rahmenstiels des Hubmastes montiert, idealerweise an der gegenüberliegenden Rahmenseite der Führungsschiene. Das Zugmittel verläuft an der Rahmenaußenseite des Hubmastes zur Umlenkrolle im Bereich der Hubmastspitze, bevorzugt kann das Zugmittel von der Trommel zur Umlenkrolle leicht ausgestellt verlaufen. Als Antriebsaggregat zur Trommelbetätigung eignet sich ein Elektromotor, der ein Direktantrieb oder ein Getriebemotor sein kann.

Idealerweise ist pro Stiel des Rahmens, d.h. pro vertikal stehenden Rahmenteil, jeweils eine Führungsschiene vorgesehen und pro Führungsschiene idealerweise ein separater flaschenzugbasierter Antrieb integriert. Damit lässt sich die Hubeinheit über wenigstens zwei separate flaschenzugbasierte Antriebe bewegen. Zur Gewährleistung eines Geradelaufs der Hubeinheit müssen die wenigstens zwei Antriebe synchron angesteuert sein. Als synchronisierte Antriebsansteuerung ist ein Betrieb im sogenannten Gantry-Modus vorstellbar. In diesem Fall lassen sich mittels spezieller Steuerfunktionen die wenigstens zwei Antriebsaggregate winkelsynchron zueinander betreiben. Ein realisierter Gantry-Antrieb verhält sich dann so, als hätte der Hubantrieb nur einen einzigen Antriebsmotor.

Zur Antriebssteuerung ist zweckmäßigerweise in wenigstens einem Antriebsaggregat ein internes Positionsmesssystem vorhanden, das die Ist-Position der Antriebswelle erfasst. Als internes Positionsmesssystem kann ein interner Drehgeber pro Antrieb dienen, auf Grundlage der Messsignale eine synchronisierte Antriebsansteuerung realisiert sein kann.

Alternativ oder zusätzlich kann wenigstens ein vorzugsweise für jeden Antrieb ein externes Positionsmesssystem installiert sein, insbesondere in Form eines Wegemesssystems, das die tatsächliche Hubbewegung der Hubeinheit als Absolutwert wiedergibt. Die Elastizität des verwendeten Zugmittels, beispielsweise eine auftretende Seildehnung bei großen Lasten, kann zur Verfälschung der Positionsbestimmung mittels der internen Drehgeber führen. Durch optionale Verwendung eines externen Wegemesssystems können diese Effekte durch Vergleich der Messwerte erkannt und gegebenenfalls bei der Antriebssteuerung kompensiert werden, um einen Schieflauf der Hubeinheit zu verhindern. Denkbar ist es ebenfalls, dass durch die Messwertanalyse, d.h. einen Vergleich der Differenzbeträge der separaten Antriebe auf eine ungleiche Belastung der Antriebsseiten geschlossen werden kann. Tritt beispielsweise auf einer Seite der Hubeinheit eine größere Seildehnung auf, so kann die Steuerung auf einer außermittige Belastung der Hubeinheit schließen und dies für die weitere Antriebssteuerung berücksichtigen.

Als mögliches externes Wegemesssysteme eignet sich beispielsweise eine entlang der Führungsschiene gespannte Kette, in die ein passendes an der Hubeinheit angeordnetes Zahnrad als Drehgeber eingreift. Denkbar ist auch die Verwendung einer Zahnstange, die entlang der Führungsschiene befestigt ist und die durch ein an der Hubeinheit montiertes Ritzel als Drehgeber gekämmt wird. Wesentlich bei den vorgestellten mechanischen Wegemesssystemen ist, dass die einzelnen Messkomponenten unbelastet sind und folglich keinen Dehnungseffekten unterliegen.

Möglich ist auch der Einsatz eines Seils, insbesondere Stahlseils, das unbelastet entlang der Führungsschiene verläuft und über eine an der Hubeinheit befestigte Windeneinheit im Hubbetrieb auf- bzw. abgewickelt wird. Über einen in der Winde integrierten Drehgeber kann eine absolute Wegemessung erfolgen. Die vermutlich einfachste Lösung zur absoluten Wegmessung ist ein an der Führungsschiene installiertes Lineal, das mechanisch und/oder optisch abgetastet wird.

Alternativ zur mechanischen Wegmessung ist der Einsatz eines optischen Messsystems denkbar, beispielsweise unter Verwendung von lasergesteuerten Messaufnehmern, die bestimmte Flächenabschnitte des Hubmastes scannen und den zurückgelegten Weg der Hubeinheit erfassen.

Zur Realisierung des synchronen Antriebsverlaufs und einer optionalen Kompensierung auftretender Dehnungseffekte im Zugmittel ist vorzugsweise eine Steuerung vorgesehen, die entsprechende Mittel zur Differenzbildung zwischen den erfassten Messsignalen aufweist. Die Steuerung kann basierend auf der Messwertanalyse abweichende Dehnungseffekte pro Antriebsseite durch Nachjustierung des nachzuführenden Antriebs kompensieren. Weiterhin ist es möglich, über diese Mittel festzustellen, ob ein auf der Hubeinheit aufgenommenes Objekt mittig oder außermittig angeordnet ist.

Bisher werden bei entsprechenden Hubmasten die Führungsschienen innerhalb der Rahmenstruktur, d.h. an der Innenseite der senkrecht verlaufenden Stiele angeordnet. Bei einer bevorzugten Ausführungsform der Erfindung wird wenigstens eine Führungsschiene an einer Außenseite wenigstens eines Stieles des Hubmastes angeordnet, um dadurch die vollständige Rahmenhöhe für die Fahrbewegung der Hubeinheit ausnutzen zu können. Die Führungsschiene ist folglich vorgelagert.

Die Umsetzung der Hubeinheit kann als u-förmige Plattform realisiert sein, wobei die entstehende U-Form eine obenliegende Öffnung aufweist. Folglich umfasst die Hubeinheit eine horizontale Aufnahmeplattform mit daran senkrecht nach oben verlaufenden Seitenflächen, die sich parallel zur Innenseite des rahmenartigen Hubmastes erstrecken.

Zur Fixierung der aufgenommenen Objekte auf der Lagerplattform der Hubeinheit ist es zweckmäßig, eine verstellbare Fixierungseinheit vorzusehen, vorzugsweise in Form von wenigstens zwei auf der Plattform gelagerten Balken. Der Abstand zwischen den zwei Komponenten der Fixierungseinheit ist idealerweise verstellbar, sodass diese durch Abstandsänderung an das aufzunehmende Objekt angepasst werden kann. Denkbar ist es ebenfalls, aufgenommene Objekte durch eine Verstellung der Fixierungsmittel zu fixieren bzw. zwischen die Fixierungsmittel einzuklemmen.

Möglich ist es ebenfalls, die Fixierungseinheit zusätzlich teleskopierbar auszugestalten, vorzugsweise sind die wenigstens zwei Balken in Längsrichtung teleskopierbar, wodurch ein aufgenommenes Objekt von der Hubeinheit zum gewünschten Lagerplatz bewegt werden kann oder von diesem aufgenommen werden kann.

In einer weiteren bevorzugten Ausführungsform umfasst die Hubeinheit wenigstens zwei senkrechte Holme, die während der Hubbewegung auf einer Außenfläche des Hubmastes bzw. der Stiele des Hubmastes entlanggleiten. Über eine Konsole können ein oder mehrere Führungsrollen montiert sein, die dadurch seitlich versetzt zu den Holmen liegen. Die Führungsrollen greifen in die entsprechenden Führungsschienen des Hubmastes ein. Dadurch wird eine vorgelagerte Führung der Hubeinheit geschaffen, wodurch nicht nur höhere Hubhöhen erreicht werden können, sondern zudem eine gleichmäßigere Belastung der gesamten Struktur und folglich ein verschleißärmerer Betrieb des Fahrwagens gerade bei hohen Lasten gewährleistet wird.

Der Fahrwagen lässt sich innerhalb eines Palettenhandhabungssystems betreiben und vorzugsweise über ein Schienensystem zwischen unterschiedlichen Bearbeitungszentren bzw. ein oder mehreren Rüstplätzen bzw. Speichereinheiten verfahren. Denkbar ist ein Schienensystem mit Unter- und/oder Oberschienen. Dazu können am Mastfuss des Fahrwagens und/oder an der Mastspitze ein oder mehrere Führungsrollen vorgesehen sein, die in einer Ober- bzw. Unterschiene des Palettenhandhabungssystems rollen.

Neben dem erfindungsgemäßen Fahrwagen betrifft die vorliegende Erfindung ebenfalls ein Palettenhandhabungssystem mit wenigstens einem Fahrwagen gemäß der vorliegenden Erfindung. Das erfindungsgemäße Palettenhandhabungssystem zeichnet sich offensichtlich durch dieselben Vorteile und Eigenschaften wie der erfindungsgemäße Fahrwagen aus, weshalb an dieser Stelle auf eine wiederholende Beschreibung verzichtet wird.

Weiterhin betrifft die Erfindung ein Verfahren zur Steuerung eines Fahrwagens für ein Palettenhandhabungssystem gemäß der vorliegenden Erfindung. Erfindungsgemäß bestimmt eine Steuerung Abweichungen zwischen einer mittels eines internen Drehgebers eines Antriebs erfassten Position der Hubeinheit und eines absoluten Positionswertes eines externen Wegemesssystems. Anhand der Abweichung kann auf eine Dehnung des Zugmittels, vorzugsweise auf eine Seildehnung des flaschenzugbasierten Antriebs geschlossen werden. Weiterhin bevorzugt wird die Seildehnung für jeden flaschenzugbasierten Antrieb des Fahrwagens bestimmt und anhand der Differenz zwischen den Dehnungswerten die Positionierung der Last auf der Hubeinheit bestimmt. Auf Grundlage der Abweichungen und ermittelten Differenz können derartige Effekte durch gezielte Ansteuerung der Antriebe kompensiert werden.

Ist beispielweise die Abweichung für die linke Antriebsseite größer oder kleiner als die Abweichung der rechten Antriebsseite, kann auf eine außermittige Positionierung des aufgenommenen Objektes auf der Plattform der Hubeinheit geschlossen werden. Zudem besteht die Möglichkeit, eine maximal zulässige Grenzseildehnung zu definieren. Bei Grenzwertüberschreitung kann der Betrieb gestoppt werden, um Folgeschäden aufgrund einer Überlast zu vermeiden.

Weitere Vorteile und Eigenschaften der Erfindung sollen im Folgenden anhand eines in den Zeichnungen dargestellten Ausführungsbeispiels näher erläutert werden. Es zeigen:
- Figur 1:: eine Darstellung des erfindungsgemäßen Palettenhandhabungssystems,
- Figur 2:: eine Detailansicht des erfindungsgemäßen Fahrwagens und
- Figur 3:: eine Detailansicht der Hubeinheit des Fahrwagens gemäß Figur 2.

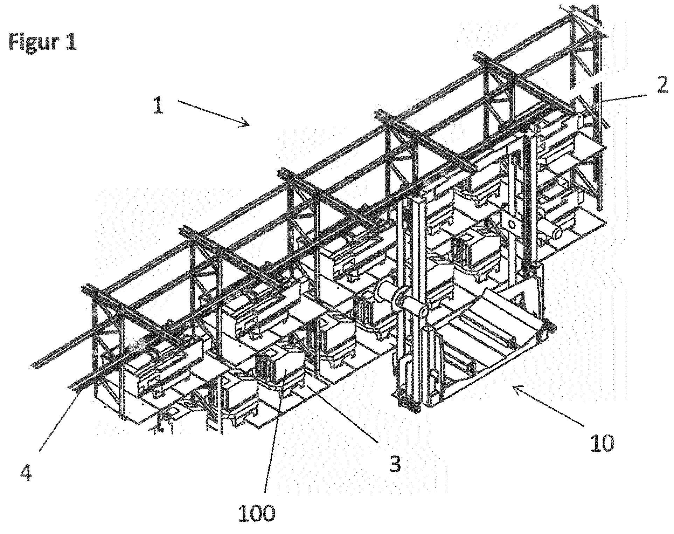

Figur 1 gibt einen Überblick über das erfindungsgemäße Palettenhandhabungssystem 1. Gezeigt ist ein regalartiges Speichersystem 2 mit diversen Rüstplätzen 3 für die schweren Bauteile 100, die ein Gewicht von über 13 Tonnen aufweisen können. In der Regel werden die schweren Bauteile 100 in Bodennähe gelagert, während leichtere Bauteile in den höheren Regalebenen Platz finden. Durch das erfindungsgemäße Palettenhandhabungssystem 1 können die im System gelagerten Bauteile 100 auf Vorrichtungen und/oder Paletten bedarfsgerecht an zentralen Rüstplätzen 2 zur Verfügung gestellt werden. Damit entfallen umfangreiche und zeitintensive Transportvorgänge durch externe Logistik. Der Transport zu den Maschinen und Rüstplätzen 2 erfolgt schonend durch den dargestellten Fahrwagen 10 und vermeidet die Gefahr von Transportbeschädigungen. Für den Transport lässt sich der Fahrwagen 10 in Längsrichtung (x-Richtung) zum gezeigten Regalsystem 2 verfahren, um die einzelnen Rüstplätze gezielt anfahren zu können und die darin gelagerten Bauteile 100 aufnehmen zu können. Für die Fahrbewegung in x-Richtung steht ein Schienensystem mit Oberschienen 4 zur Führung des Fahrwagens 10 zur Verfügung. Optional kann anstatt oder zusätzlich zur Oberschiene 4 eine Unterschiene vorgesehen sein.

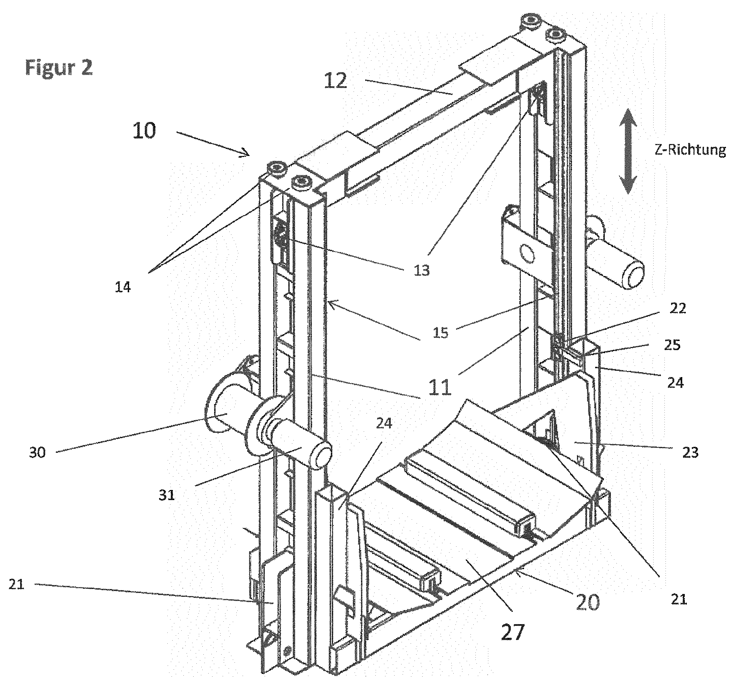

Um den extremen Lastanforderungen von über 13 Tonnen Gewicht pro Bauteil gerecht zu werden und um eine hohe Verfügbarkeit und Wartungsfreundlichkeit zu gewährleisten, ist der Fahrwagen erfindungsgemäß mit einer neuartigen Antriebstechnik für die Hubbewegung in Z-Richtung ausgerüstet, die im Detail anhand der Darstellung in Figur 2 erläutert wird. Diese Detailansicht zeigt den erfindungsgemäßen Fahrwagen 10 mit einem rahmenartigen Hubmast, der sich aus den zwei vertikal verlaufenden Stielen 11 sowie dem an der Mastspitze quer verlaufenden Balken 12 zusammensetzt. Theoretisch kann auch am bodennahen Ende ein weiterer Querbalken vorgesehen sein. An der oberen Stirnseite der Stiele 11 an der Mastspitze ist links und rechts jeweils ein Paar Führungsrollen 14 zur mittigen Aufnahme der Oberschiene 4 gelagert.

Zur Aufnahme der Bauteile 100 und die Ausführung der Hubbewegung in Z-Richtung umfasst der Fahrwagen eine Hubeinheit 20. Die Hubeinheit 20 besitzt eine Plattform 27 zur Aufnahme der Bauteile 100, deren Seitenkanten zur U-Form aufgebogen sind. An die aufgebogenen Seitenkanten schließen sich Seitenteile 23 an, die die U-Form vollenden. Ebenfalls senkrecht an den Seitenteilen 23 ist jeweils ein Holm 24 befestigt, der sich in Hubrichtung erstreckt. Das obere Holmende trägt eine Konsole 25, an deren freien Ende Führungsrollen 22 montiert sind. Die Führungsrollen 22 verlaufen somit seitlich versetzt neben den Holmen 24.

Für den notwendigen Hubantrieb wird anders als im Stand der Technik nicht mehr auf eine Kette oder ähnliche Maschinenelemente zurückgegriffen, sondern die Bewegung der Hubeinheit wird erfindungsgemäß mittels Flaschenzugtechnik erreicht, wobei als Zugmittel ein Seil eingesetzt wird. Dazu werden zwei Elektromotoren 31 verwendet, deren Abtrieb jeweils eine Seiltrommel 30 antreibt. Folglich ist pro Stiel 11 ein separater Antrieb mit eigenem Elektromotor 31 und Seiltrommel 30 vorgesehen, die jeweils fest an der Außenseite der Stiele 11 montiert sind. Von jeder Seiltrommel 30 verläuft ein eigenes Seil (nicht dargestellt) nach oben zur Hubmastspitze. Innerhalb der Stiele 11 ist knapp unterhalb des Querbalkens 12 jeweils eine Umlenkrolle 13 gelagert, deren Rotationsachse auf der y-Achse liegt, d.h. sich durch die Rahmenebene erstreckt, und folglich parallel zur Drehachse der Seiltrommel 30 verläuft. Von der Umlenkrolle 13 wird das Seil nach unten in Bodenrichtung bis zur Hubeinheit 20 umgeleitet. Für jeden Stiel 11 verläuft das Seil innerhalb der stielseitigen Führungsschienen 15. Die Hubeinheit 20 umfasst ebenfalls pro Seitenteil 23 eine Umlenkrolle 21, die als "lose" Rolle des Flaschenzugsystems dient, und von der das Seil zu einem Fixpunkt am Hubmast umgeleitet wird. Von der Umlenkrolle 13 zur Seiltrommel 30 kann das Seil leicht ausgestellt verlaufen.

Durch die Integration der losen Rollen 21 wird ein Flaschenzug realisiert, um die zum Anheben der aufgenommenen Last benötigte Kraft zu halbieren. Die Elektromotoren 31 können dadurch auch bei schweren Lasten kleiner dimensioniert werden, wodurch der benötigte Bauraum am Fahrwagen begrenzt wird. Die Drehachsen der Umlenkrollen 21 verlaufen um 90° versetzt zur Drehachse der Umlenkrollen 13. Ebenso werden auch die Belastungen der Antriebskomponenten und der damit verbundene Verschleiß verringert.

Herkömmliche Kettenantriebe übersteigen hier regelmäßig ihre Grenzkriterien und die Antriebe ihre Baulasten. Ebenso haben diese Antriebsformen aufgrund ihres größeren Platzbedarfs zwecks benötigter größerer Antriebe einen beschränkteren Hubweg zum Verfahren der Last.

Die Führungsschienen 15 sind nicht auf der Innenseite der Rahmenstiele 11 ausgebildet, sondern stattdessen auf einer dazu seitlich versetzt außenliegenden Stielfläche, d.h. diese sind der Rahmenöffnung vorgelagert. Die Länge der Führungsschiene 15 ist somit nicht mehr durch die Anordnung des Querbalkens 12 begrenzt sondern kann sich über die gesamte Länge der Stiele erstrecken, um die maximale Hubhöhe vollständig auszureizen. Die Holme 24 der Hubeinheit 20 gleiten während der Hubbewegung entlang der Außenkante der Stiele 11, d.h. auf der dem Regalsystem 2 abgewandten Fläche der Stiele 11. Die Führungsrollen 22 rollen gleichzeitig in der Führungsschiene 15. Durch die vorgelagerte Führung der U-förmigen Hubeinheit 20 kann eine optimalere Höhenausnutzung erreicht werden, d.h. die maximale Hubhöhe eines schweren Bauteils 100 ist nur durch sein Gewicht beschränkt, jedoch nicht durch seine Höhenabmessung. Gleichzeitig kann die Hubeinheit 20 weiter nach oben verfahren werden, d.h. der verfahrene Hubweg der Hubeinheit 20 ist länger als bei herkömmlichen Konstruktionen. Dadurch lässt sich eine optimale Hallenauslastung generieren, da somit aus baukonstruktiven Maßen eine Bestückung einer weiteren obersten Reihe eines Regales mit Rüstplätzen möglich ist.

Die beiden Antriebe 31 der beiden Stiele 11 arbeiten synchron im Gantry-Betrieb. Jeder Antrieb 31 umfasst einen internen Lagegeber, der die Drehbewegung der Welle erfasst und ein Maß für die relative Hubbewegung liefert. Ergänzend ist pro Stiel 11 bzw. Antriebseite jeweils ein Wegemesssystem vorhanden, dass die absolute Position der Hubeinheit 20 bzw. die zurückgelegte absolute Wegstrecke erfasst.

Als Wegemesssystem sind unterschiedliche Ausführungen denkbar. Zum einen wäre eine mitlaufende Kette an der Hubeinheit 20 ohne Last denkbar. Die Position wird hierbei über ein eingreifendes Kettenrad mit Drehgeber bestimmt. Das Gleiche ist denkbar mit einer Zahnstange an einer Führungsschiene 15 und einem mitlaufenden Ritzel ohne Last mit Drehgeber. Eine noch einfachere Ausführungsform wäre ein Stahlseil ohne Last mit Seilwinde und einem Drehgeber. Dabei hat das Seil keine Last und damit keine Dehnung. Die einfachste Ausführungsform ist eine Führungsschiene 15 mit einem aufgesetzten bzw. integrierten Lineal. Zum anderen erweist es sich als denkbar, optische Distanzmess-Systeme als Wegemess-Systeme einzusetzen. Die Distanzmesseinheit, beispielsweise in Form eines Distanzlasers erfasst an den Stielen 11 von oben nach unten eine bestehende Fläche und kann somit auf den zurückgelegten Weg der Hubeinheit schließen.

Die Messwerte der internen Drehgeber und des externen Wegemesssystems können pro Antriebsseite miteinander verglichen werden und ein Maß für die vorliegende Seildehnung innerhalb jeder Antriebsseite liefern. Anhand der Differenz aus den Seildehnungen für jede Antriebsseite kann auf einen möglichen Schieflauf der Hubeinheit 20 geschlossen werden, der beispielsweise durch eine ungleichmäßige Belastung der Plattform 21 hervorgerufen werden kann. Wird das Bauteil beispielsweise außermittig mehr linksseitig auf der Plattform der Figur 2 platziert, so wird die Seildehnung der linken Antriebsseite größer sein als die Dehnung der rechten Seite. Dieser Effekt lässt sich durch die Steuerung mittels der oben beschriebenen Messwertanalyse im Betrieb feststellen und der linke Antrieb kann bedarfsweise nachgeführt werden. Dazu kommuniziert der interne Drehgeber mit dem externen Wegemesssystem der Konstruktion über die Software der Steuerung, um zunächst die einzelnen Seildehnung zu berechnen und durch Nachjustierung der Antriebe 30 gegebenenfalls auszugleichen. Bei unterschiedlichen Seildehnungen pro Antriebsseite kann ebenfalls eine Nachjustierung der betroffenen Antriebsseite erfolgen, um eine mögliche Schiefstellung der Plattform 21 zu vermeiden.

Da eine absolute Position der Hubeinheit 20 in Z-Richtung zur Be- und Entladung der Plattform 21 notwendig ist, wird eine maximal zulässige Seildehnung als Kriterium zur Verwirklichung einer zusätzlichen Sicherheitsfunktion definiert. Bei Grenzwertüberschreitung kann der Betrieb angehalten werden, um weitere Beschädigungen der Maschine aufgrund einer Überlastsituation zu unterbinden.

Aufgrund der schweren Lasten kommt es während dem Verfahren zu zwei Effekten. Zum einen können sich die Führungsschienen 15 verformen und zum anderen dehnt sich das Seil unter der Last der Bauteile aus. Um diese zwei Punkte zu kompensieren, werden die Führungsschienen 15 durch entsprechende Querstreben an den oberen und unteren Führungsschienen 15 verstärkt und gleichzeitig die Hubeinheit 20 auf vorgelagerte Führungen aufgesetzt. Dies führt zu einer reduzierten Kraft, welche auf den Rahmen wirkt und eine genauere Positionierung ist möglich.

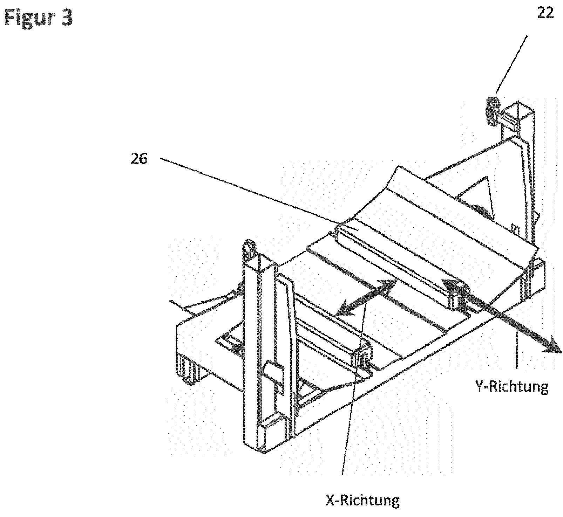

Die Hubeinheit 20 ist zusätzlich mit zwei Fixierungseinheiten 26 ausgestattet, die der Figur 3 zu entnehmen sind. Die beiden balkenartigen Fixierungseinheiten erstrecken sich über die Tiefe der Aufnahmeplattform 21 der Hubeinheit 20 und sind sowohl in X-Richtung als auch in Y-Richtung verschiebbar gelagert. Über die X-Richtung kann der Abstand der beiden Fixierungseinrichtungen 26 zueinander variiert werden, um dadurch die Aufnahmeplattform 21 an das aufzunehmende Objekt 100 anzupassen und verschiedene Bauteile 100 mit unterschiedlichen Vorrichtungen/Paletten oder gleiche Bauteile 100 auf unterschiedlichen Vorrichtungen/Paletten aufnehmen zu können. Zusätzlich sind die Balken 26 teleskopierbar, um zu transportierende Objekte 100 aus dem Regal 2 aufnehmen zu können bzw. in diesem ablegen zu können. Die Bewegungen in X-Richtung der Fixierungsmittel 26 erfolgt vor der Lastaufnahme ohne Belastung. Das teleskopartige Verfahren in Y-Richtung erfolgt mit Last, entweder zum Regal hin um ein Bauteil zu entnehmen oder das Regal zu bestücken. Die Fixierungsmittel arbeiten in diesem Beispiel ähnlich der Zinken eines Gabelstaplers.

## Patentansprüche

1. Fahrwagen für ein Palettenhandhabungssystem mit wenigstens einem rahmenartigen Hubmast und einer darin höhenverstellbar geführten Hubeinheit, **dadurch gekennzeichnet,**
**dass** für die Ausführung der Hubbewegung der Hubeinheit wenigstens ein flaschenzugbasierter Antrieb vorgesehen ist.

2. Fahrwagen nach Anspruch 1, **dadurch gekennzeichnet, dass** die lose Rolle des wenigstens einen flaschzugbasierten Antriebs an der Hubeinheit angeordnet ist, vorzugsweise mit einer Rotationsachse, die senkrecht auf einer Seitenwandung der Hubeinheit steht.

3. Fahrwagen nach einem der vorhergehenden Ansprüche, **dadurch gekennzeichnet, dass** wenigstens eine Umlenkrolle am oberen Ende des Hubmastes, insbesondere innerhalb der Führungsschiene des Hubmastes integriert ist, wobei die Rotationsachsen der Umlenkrolle und der losen Rolle der Hubeinheit idealerweise senkrecht aufeinander stehen.

4. Fahrwagen nach einem der vorhergehenden Ansprüche, **dadurch gekennzeichnet, dass** das Zugmittel des wenigstens einen flaschenzugbasierten Antriebes ein Seil ist.

5. Fahrwagen nach einem der vorhergehenden Ansprüche, **dadurch gekennzeichnet, dass** pro Stiel des Rahmens jeweils eine Führungsschiene vorgesehen ist und pro Führungsschiene idealerweise ein eigener flaschenzugbasierter Antrieb vorgesehen ist.

6. Fahrwagen nach Anspruch 5, **dadurch gekennzeichnet**, das eine Steuerung zur synchronisierten Ansteuerung der wenigstens zwei Antriebe vorgesehen ist, wobei der Synchronbetrieb vorzugsweise als Gantry-Antrieb umgesetzt ist.

7. Fahrwagen nach einem der vorhergehenden Ansprüche, **dadurch gekennzeichnet, dass** wenigstens ein flaschenzugbasierter Antrieb einen integrierten Drehgeber aufweist und zusätzlich ein externer Positionsgeber, insbesondere in Form eines Wegemesssystems für wenigstes einen Antrieb vorgesehen ist.

8. Fahrwagen nach Anspruch 7, **dadurch gekennzeichnet, dass** die Steuerung Mittel zur Differenzbildung zwischen den Signalen der wenigstens zwei Drehgeber und/oder zwischen den Signalen der externen Positionsgeber ermittelt und basierend auf den Differenzbeträgen eine Nachjustierung eines nachlaufenden Antriebs vornimmt.

9. Fahrwagen nach einem der vorhergehenden Ansprüche, **dadurch gekennzeichnet, dass** als externes Wegmesssystem eine unbelastete Kette mit eingreifenden Kettenrad als Drehgeber und/oder eine entlang der Führungsschiene angeordnete Zahnstange mit einem an der Hubeinheit mitlaufendem unbelasteten Ritzel und/oder ein unbelastetes Stahlseil mit einer an der Hubeinheit vorgesehenen Seilwinde als Drehgeber und/oder eine optisches Messsystem zur Erfassung der zurückgelegten Strecke angeordnet ist.

10. Fahrwagen nach einem der vorhergehenden Ansprüche, **dadurch gekennzeichnet, dass** die wenigstens eine Führungsschiene an der Außenseite wenigstens eines Stiels ausgebildet ist, um die vollständige Rahmenhöhe des Fahrwagens auszunutzen.

11. Fahrwagen nach einem der vorhergehenden Ansprüche, **dadurch gekennzeichnet, dass** die Hubeinheit eine u-förmige Plattform ist.

12. Fahrwagen nach einem der vorhergehende Ansprüche, **dadurch gekennzeichnet, dass** auf der Lagerplattform der Hubeinheit eine verstellbare Fixierungseinheit vorgesehen ist, vorzugsweise in Form von wenigstens zwei auf der Plattform gelagerten Balken, deren Abstand zueinander zur Fixierung eines aufgenommenen Objektes verstellbar ist.

13. Fahrwagen nach Anspruch 12, **dadurch gekennzeichnet, dass** die Fixierungseinheit teleskopierbar ist, vorzugsweise sind die wenigstens zwei Balken in Längsrichtung teleskopierbar, um ein aufgenommenes Objekt von der Hubeinheit zum gewünschten Lagerplatz zu verfahren oder von diesem aufzunehmen.

14. Fahrwagen nach einem der vorhergehenden Ansprüche, **dadurch gekennzeichnet, dass** die Hubeinheit zwei senkrechte Holme umfasst, die entlang einer Außenfläche des Hubmastes geführt sind und über eine Konsole ein oder mehrere Führungsrollen montiert sind, die in entsprechende Führungsschienen des Hubmastes bzw. der Stiele des Hubmastes eingreifen.

15. Verfahren zur Steuerung eines Fahrwagens nach einem der vorhergehenden Ansprüche, **dadurch gekennzeichnet, dass** die Steuerung die Differenz zwischen der durch den oder die Drehgeber ermittelten Lage und der mittels externem Positionsgeber ermittelten absoluten Lage erfasst und durch entsprechende Antriebsansteuerung eine Dehnung des Zugmittels kompensiert.

16. Verfahren nach Anspruch 14, **dadurch gekennzeichnet, dass** auf Grundlage der Seildehnungsanalyse bestimmt wird, ob ein aufgenommenes Objekt mittig oder außermittig auf der Plattform der Hubeinheit platziert ist und ein Antrieb nachgeführt wird, um eine Schiefstellung auszugleichen.

17. Palettenhandhabungssystem mit wenigstens einem Fahrwagen gemäß einem der Ansprüche 1 bis 14.
